# EUROPEAN PATENT APPLICATION

(11) **EP 2 808 788 A1**
(43) Date of publication of application: **03.12.2014**
(21) Application number: 13360010.6
(22) Date of filing: 30.05.2013
(51) Int. Cl.: G06F 9/455, G06F 9/54

(54) **Method for data processing, element to process data, method for monitoring activity and computer program product**

(71) Applicant: ALCATEL LUCENT, 92100 Boulogne-Billancourt (FR)
(72) Inventor: Cucinotta, Tommaso, Dublin 15 (IE); Bedini, Ivan, Dublin 15 (IE)
(74) Representative: Greenwood, Matthew David

(57) **Abstract**

A computer-implemented method for data processing, comprising providing at least one computational element to form an events processing framework distributed across at least a user space and a kernel space of an operating system in execution on a device, receiving data at the element representing at least one event for the device, processing the data according to a predetermined rule associated with the element to provide output data, and outputting the output data.

## Description

### TECHNICAL FIELD

Embodiments of the present disclosure relate to a processing framework for a computer system and more particularly to an event processing framework.

### BACKGROUND

In program execution, an operating system will typically produce a large amount of data and events. An operating system can be executing in a device, or can be an operating system associated with a virtual machine (VM) or hypervisor (virtual machine monitor, or VMM) in a virtualized environment for example.

Monitoring and processing the data and events can provide useful information. However, typically, operating systems, hypervisors and run-time environments for hosting cloud computing applications for example lack fundamental features and tools to enable the efficient distributed management, storage and processing of data and events that can be generated within such infrastructures. In a virtualized environment-for example, one may have large multi-core or many-core processing machines hosting from several tens up to hundreds of VMs or other cloud-based applications, each of which may generate several thousands of events per second that can be of relevance for the hosting run-time environment, as well as for an application itself or other related applications.

In the general area of events processing and data analytics, various platforms are available for managing, storing, and processing large amounts of data, including events, either in batch computations or in real-time. However, such frameworks cannot cope with kernel-level or hypervisor-level events, being designed purely for user-space/application-level events processing. Also, they often make use of complex and often heavyweight software infrastructures, which makes them unsuitable for the processing and routing of events at the kernel level with minimum overheads.

### SUMMARY OF THE INVENTION

According to an aspect, there is provided a computer-implemented method for data processing, comprising providing at least one computational element to form an events processing framework distributed across at least a user space and a kernel space of an operating system in execution on a device, receiving data at the element representing at least one event for the device, processing the data according to a predetermined rule associated with the element to provide output data, and outputting the output data. The events processing framework can form a directed graph of multiple computational elements for the environment. The method can further comprise receiving data at the element representing a sequence of multiple events in the form of an event stream with regular or irregular spacing between the multiple events of the stream. An event can include data representing the identity of the device or of a process causing the event.

The events processing framework can be distributed across at least a user space and a kernel space of an operating system in execution on a device, or across software running at least at two different privilege levels of the processor on a device. For example, there may be multiple privilege levels on a CPU, out of which two are used by an OS for example and which are mapped/associated to user-space and kernel-space modes of operations. In a virtualized environment, further privilege levels may be provided. For example, at least one level may be provided that sits between the user and kernel spaces. This 'middle' layer can be used as a space over or within which the framework can be deployed or distributed or otherwise executed. For example, such an additional layer(s) can be used instead of or in addition to a kernel and/or user space.

The or each element can include zero, one or more input event ports, and/or zero, one or more output event ports, through which the or each element, respectively, can receive events and produce events. An event port for an element can be associated with an event type representing a type of event that can transit through that port.

According to an example, the device can be a virtual computing device operating through at least one physical computing device as part of a virtualised environment. The framework can be distributed between a kernel space of a virtual machine monitor, a kernel space of the virtual computing device, and a user space of the virtual computing device. Alternatively, the framework can be distributed between a kernel space of the virtual computing device, a user space of the virtual computing device and over the kernel and/or user spaces of other virtual machines, such as those instantiated as part of the same virtual environment.

The events processing framework can be dynamically scaled by instantiating multiple elements with the same characteristics to provide horizontal scaling capability for the framework. In an example, an element used to scale the framework can be instantiated in a separate virtual machine for example.

According to an aspect, there is provided a computer-implemented computational element to process data representing an event associated with a device, the element forming an events processing framework distributed between at least a user space and a kernel space of the device, and operable to receive data representing the event, process the received data according to a predetermined rule associated with the element to generate output data, and forward the output data. The element can further comprise zero, one or more input event ports to receive data representing the event, and/or zero, one or more output event ports to provide the output data.

An event port can be associated with an event type used to determine the type of event that can transit through that port. The device can be a virtual computing device, and in which the framework is distributed between a kernel space of a virtual machine monitor, a kernel space of the virtual computing device, and a user space of the virtual computing device. Alternatively, the framework can be distributed between a kernel space of the virtual computing device, a user space of the virtual computing device and over the kernel and/or user spaces of other virtual machines, such as those instantiated as part of the same virtual environment.

According to an example, there is provided a computer-implemented method for monitoring activity in a virtualised environment in which at least one virtual computing device operates through at least one physical computing device, said method comprising generating multiple computational elements to define a topology for processing data associated with one or more events of the device, wherein at least a proportion of the multiple elements are distributed between the kernel space and the user space of a virtual computing device or are distributed across a boundary of at least two of the multiple virtual computing devices.

According to an example, there is provided a computer program product, comprising a computer usable medium having computer readable program code embodied therein, said computer readable program code adapted to be executed to implement a method for data processing as described herein.

Thus, there is provided a method for deploying lightweight yet highly efficient and reusable elements that can be combined in arbitrary ways to create complex events processing topologies that allow a cloud infrastructure, as well as the hosted applications, as well as any generic OS or run-time environment, to readily process in real-time (store, manage, transform) large amounts of events such as those generated within the platform, in a scalable way.

### BRIEF DESCRIPTION OF THE DRAWINGS

Embodiments will now be described, by way of example only, with reference to the accompanying drawings, in which:
Figure 1 a schematic block diagram of a configuration of a system for a virtualised environment;
Figure 2 is a schematic block diagram showing a data processing framework with multiple elements according to an example;
Figure 3 is a schematic block diagram of a framework according to an example;
Figure 4 is a schematic block diagram of a framework according to an example; and
Figure 5 is a flowchart of a method for data processing according to an example.

### DESCRIPTION OF EXAMPLE EMBODIMENTS

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

According to an example, an event can include those related to: computing workload and CPU scheduling, including an event relating to a VM or an application going idle or having been woken up for further processing for example, or higher-level events signaling that a physical core or CPU or host might be experiencing over-loading due to too many ready-to-run VMs or cloud applications for example; events related to networking and communications among VMs, such as the fact that a VM has received a packet, or that it received a packet of some given type after a delay due to co-scheduling, or that a network link or a network is being saturated (or dangerously approaching saturation) due to an excess of traffic being injected therein; events related to storage services, such as the fact that a VM requires a single transfer from some network-attached storage location, or remote storage location, and/or the fact that many network-intensive transfers have been required in some last observation window; application-level events such as the drop or lack of a frame or the begin or end of reception of a frame or Group of Pictures (GoP) in a video streaming application, or some error condition to be notified to other subsystems or components.

Events such as those mentioned above can be usefully processed/consumed by the run-time environment itself, by the application generating them and by other potentially interested applications. For example, scheduling events can be processed/consumed by or for a packet scheduler, network traffic control engine or CPU scheduler/load-balancer. Often it is also useful to collect an aggregated and historical view of such data in order to make it available to higher-level logic for a variety of purposes such as determining VM placement, data center optimization and so on.

In a cloud or virtualized infrastructure, the overall amount of information produced that can be processed by all the computing elements, as well as the network elements, including those ones equipped with a network operating system, may easily become massively large. According to an example, in cloud run-time environment or an operating system (OS), which can be part of virtualized environment or not as the case may be, computational elements can be embedded directly within a kernel itself, such as the host OS kernel, such as when using the Linux+KVM ensemble or similar as hypervisor, or directly in a hypervisor, such as when using Xen or VMWare or similar for example. Thus, one or more computational elements can be provided at the source where events are generated, thus enabling a system to take advantage of such events, and being capable of reacting to critical events, while at the same time keeping events processing and management overheads to a minimum. Accordingly, the large volumes of data that are generated can be leveraged without introducing ad-hoc additional layers to already complex software architectures. In addition, events can be filtered directly at the source where they are generated, which can be valuable for kerhel-level events, so as to reduce overheads to a minimum.

According to an example, a method for data processing, comprises providing at least one computational element to form an events processing framework distributed across at least a user space and a kernel space of an operating system in execution on a device. Data representing at least one event for the device can be received at the element, and subsequently processed according to a predetermined rule associated with the element in order to provide output data. A real-time data analytic processing platform is therefore provided that can be leveraged to take advantage of the large volumes of data produced in a environment, such as a virtualized environment for example, that defines a distributed events processing framework.

The events processing framework can be distributed across at least a user space and a kernel space of an operating system in execution on a device, or across software running at least at two different privilege levels of the processor on a device. For example, there may be multiple privilege levels on a CPU, out of which two are used by an OS for example and which are mapped/associated to user-space and kernel-space modes of operations. In a virtualized environment, further privilege levels may be provided. For example, at least one level may be provided that sits between the user and kernel spaces. This 'middle' layer can be used as a space over or within which the framework can be deployed or distributed or otherwise executed. For example, such an additional layer(s) can be used instead of or in addition to a kernel and/or user space.

According to an example, a predetermined rule can be a simple computational, arithmetic or functional operation. For example, an element can be a counter, to receive data as input and perform a count at each input. A threshold element can take the output of the count element as input for example, and return a result when the threshold is met. More complex operations can be provided, such as an element that can take a count of some event sequence as input and estimate a percentage of CPU usage for example. Still more complex operations can be performed, such as by an element that can receive a packet as input, and process the packet to provide an output if the packet is expected or recognized for example, such that the element can act as a firewall. Other examples and alternatives are possible as will be appreciated. Typically, in an example, relatively simple elements associated with more basic operations can be instantiated or otherwise deployed as needed in a kernel space, whilst relatively complex elements associated with less trivial or basic operations can be deployed in kernel or user space. In some example, complex elements can be deployed in kernel space.

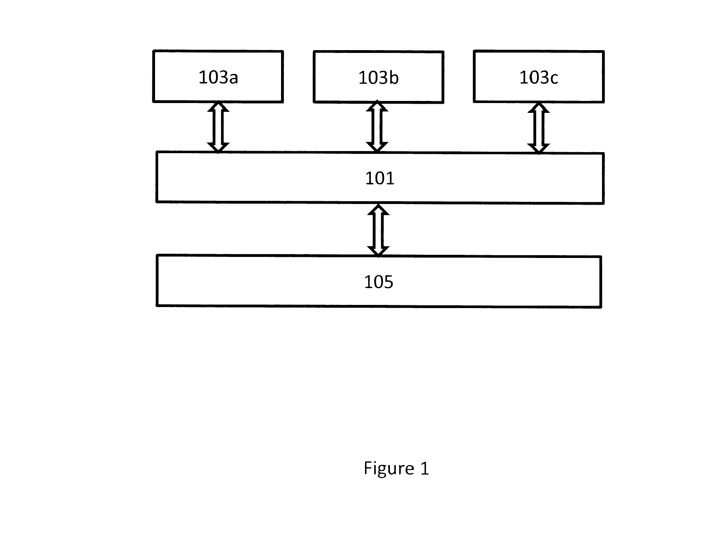

Figure 1 is a schematic block diagram of a configuration of a system for a virtualised environment. A VMM 101 controls one or more VMs 103, each of which uses a guest OS, executing over a layer of physical hardware 105. For example, the VMM can execute, when the plurality of guest OSs operate, a dispatch process of the guest OS that is a process for determining the guest OS to which the CPU of the physical hardware is allocated and starting up the guest OS. Further, the VMM (or hypervisor) can perform emulation of a privileged instruction executed by each guest OS. For instance, when the guest OS makes a request for executing the privileged instruction in a user status, the VMM can execute a process of intercepting the privileged instruction requested for the execution by exception handling and emulating the execution-requested privilege instruction.

Typically VMM 101 performs the processes such as starting up and stopping the guest OS and managing and controlling the VMs 103. There is, however, a case in which the virtual machine is managed and controlled via a special guest OS called a host OS. Further, there is a case in which the management and the control of a virtual machine is performed as a function called service control by a computer program different from the VMM. All such variations are within the scope of the methods described herein.

VMM 101 performs an I/O (input/output) process with a physical hardware 105 in response to an I/O request given from a guest OS of a VM. The VMM can access, via a device driver, a physical device such as a display, an external storage device and a LAN (Local Area Network), all of which are known and not explained in any further detail for the sake of clarity.

In a VM 103, an application program is executed on the guest OS, while the guest OS can be executed on the VMM. When the application program requests the guest OS to execute the I/O process, the guest OS issues an I/O instruction. The thus-issued I/O instruction is intercepted by the VMM for example, and the I/O process with the physical device is performed by the driver of the VMM, the guest OS or the host OS.

A large amount of data therefore flows in an environment such as that of figure 1, which data can pass, typically, via the VMM to the various VMs that have been instantiated, but which can also include data that can pass across the boundaries of VMs. According to an example, data flow can include event or event streams that can be utilized, where an event is an action or occurrence that can be detected and processed by an application or OS.

An event stream is a sequence of events with regular or non-regular inter-spacing in time. In an example, each event can include one or more information fields such as the PID or VM ID of the entity causing the event, the type of event and so on. The information fields can be in the form of name/value pairs or equivalently values within well-defined data structures.

Events may be generated and trigger actions (so as to be handled) inside an OS kernel or hypervisor (for example, process or VM wake-up, receipt of a network packet, peripheral error notification interrupt and so on), as well as at the user-space or middle-ware layers, or within cloud applications or components such an application receiving or sending certain types of data, or an application explicitly raising certain types of events.

According to an example, an event-processing node is a computational element that can be used to process the data associated with or representing an event or event stream as described above. Such elements can be connected, defined, deployed or otherwise provided into directed graphs of computational elements, flowing from the elements that act as sources towards elements that can act as sinks, and in doing so traversing various types of processors or processing steps (including, for example, transformations such as aggregations, counting, filtering, averaging, computing a maximum or minimum or other statistics, such as over sliding windows of past samples).

Each element may have zero, one or more input event ports, as well as zero, one or more output event ports, through which it may, respectively, receive events and produce events. Event ports are associated with well-defined event stream types, characterized for example by the type of events that can transit through that port such that the output ports of an element may be connected to the input ports of any other element, provided that the event streams handled by the two ports are the same, or are compatible.

Elements do not need to be independent processes or threads, but may be functions that are called in various possible contexts. For example, a function called within an OS kernel as part of a system call, as well as a function called from an application thread via a library linked to the application.

In an example, elements can be provided in multiple instances and have horizontal scalability capabilities so that elements may be dynamically scaled so as to match a workload that can be dynamically changing within a virtualized environment. For example, in the case that a workload for a set of linked elements forming a computational topology or framework grows so high that it cannot handled by a single instance, the framework can be scaled by spawning new instances of elements or the framework for example in order to cope with the processing requirements due to a larger than expected volume of data, which can be typical in a dynamic environment in which VMS can be instantiated on an ad-hoc basis.

Accordingly, elements, which operate as event processors, can be readily instantiated when needed, In addition, lightweight elements can be provided that can be instantiated at the kernel-level, such as those providing counting, averaging or other simple statistics for example, through appropriate system calls or other interfaces. Similarly, in addition to readily available simple event processor elements, more complex ones that can be readily instantiated at the user-space or VM or cloud application levels can be provided. Therefore, computational elements in the form of event processors can be used to generate a data processing framework. Elements can be provided in kernel space, user space and can span the boundary between the two. Elements can be instantiated or generated in the spaces, and there can be various levels of complexity to elements, which can be leveraged such that certain types can be readily instantiated in kernel space and/or in a user or VM kernel/user space for example.

Elements may also be application or system components that connect to the data analytic framework for the purpose of capturing events of interest or injecting into the system specific events. However, such elements may also have additional functionality and features that need not be strictly related to the data analytic processing framework, as with an application that can react to a multitude of stimuli, including both events coming from the platform but also packets coming from remote clients through the network to which the component has to respond for example.

In an example, there are provided one-to-one types of connections among elements, one-to-many connections, as well as many-to-one connections. The "many" variants of said connections differ from using several one-to-one connections in that they can permit efficient handling of a situation. For example, a single copy of a produced event (output by an output port for example) may be made available to the various consumers (listening to their input ports for example) so as to avoid the wasteful creation of multiple copies of the event in memory. In the case of events carrying non-negligible amounts of data, it may be useful to associate ports with an indication of the copy model/semantic to enforce, namely if events as output by producers should be copied and made available to consumers or if simply a pointer should be handed over from the former to the latter, avoiding unneeded extra copies of the event contents for example.

Special system-wide one-to-many event streams may be defined that allow posting events to which any other component of the system, VM, cloud application and so on interested in receiving the event may register through a proper notification interface depending on the language used and run-time environment. For example, a service like the d-bus daemon may be realized as one of such special system-wide streams.

In an example, a framework can leverage the Access-Control Model (ACM) natively available within a cloud kernel in order to grant or deny requests for connecting nodes to existing streams, creating new streams, and changing the topology of existing connections. A custom ACM tailored to the needs of the framework described may be created if desired.

According to an example, a topology or data processing framework includes one or more computational elements or nodes that interact with each other and that can cross the kernel-space, user-space, middle-ware space and application-space layers, and/or cross VM boundaries via appropriate para-virtualization interfaces. That is, a set of elements forming a framework for processing events and the data associated with and representing the events (or event streams) can be provided in multiple spaces of a system, environment or operating system, and individual elements can pass data there-between, including across boundaries associated with kernel/user space and those other spaces noted above.

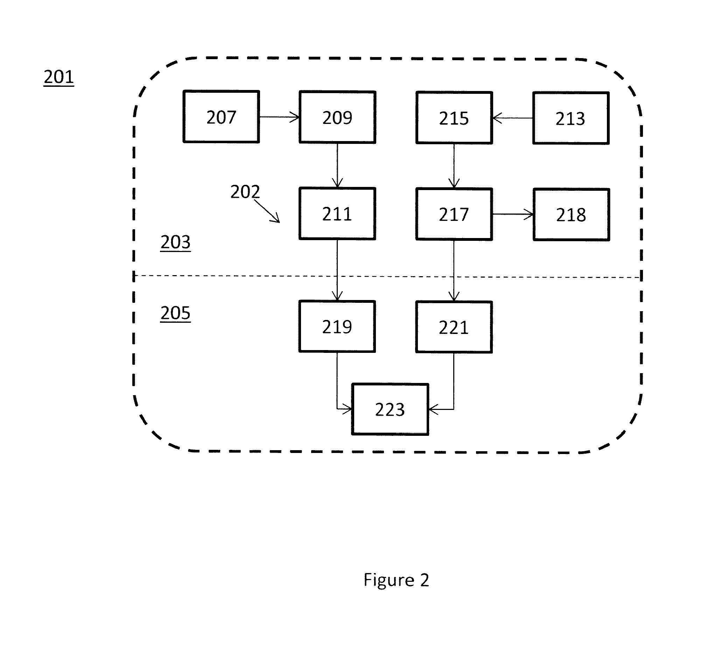

Figure 2 is a schematic block diagram showing a data processing framework with multiple elements according to an example. A host 201, such as a VM, OS or VMM for example, is split between a kernel space 205 and a user space 203. Broadly speaking, kernel space and user space is the separation of the privileged operating system functions and the restricted user applications. More particularly, memory, such as RAM of a system or the virtual counterpart can be divided into kernel space and the user space. Typically, the kernel runs in the part of the memory entitled to run it, and this part cannot be accessed directly by the processes of the normal users, while the kernel can typically access all parts of the memory. System calls act as an interface between user processes and the kernel processes in an operating system, and access rights are placed on the kernel space in order to prevent user access. In a VMM for example, hyper calls act as an interface between user processes and the kernel processes of the VMM. When a system or hyper call occurs, an interrupt is sent to the kernel in question.

An element 207 of a framework, generally depicted as 202 in figure 2, relates to an event that can occur in execution of the OS or an application. For example, element 207 can be triggered to provide an event output to be input to element 209 each time there is a particular switch event associated a process for example. Element 209 can be a simple counter element that can feed, as output, a count to a threshold element 211 for example. The output of 211 can be fed to a further counter 219, this time in user space, such that the transit of data through the framework spans the boundary between the kernel and user spaces. The output of 219 can be fed to an input of an element 223, which can be a monitor element for example that can be used to forward processed data from the host 201. A similar pathway for an event input to element 215 can be followed in figure 2, such that the eventual output is also fed to 223. Similarly to the above, the kernel/user space boundary is bridged by the framework 202.

The exemplary topology for a data processing framework as depicted in figure 2 is a relatively simple example illustrating the fact that multiple computational elements can be arranged to form a directed graph, and that there can be a processing flow for events or sequences of events, and thus more broadly data, between the kernel and user spaces as desired.

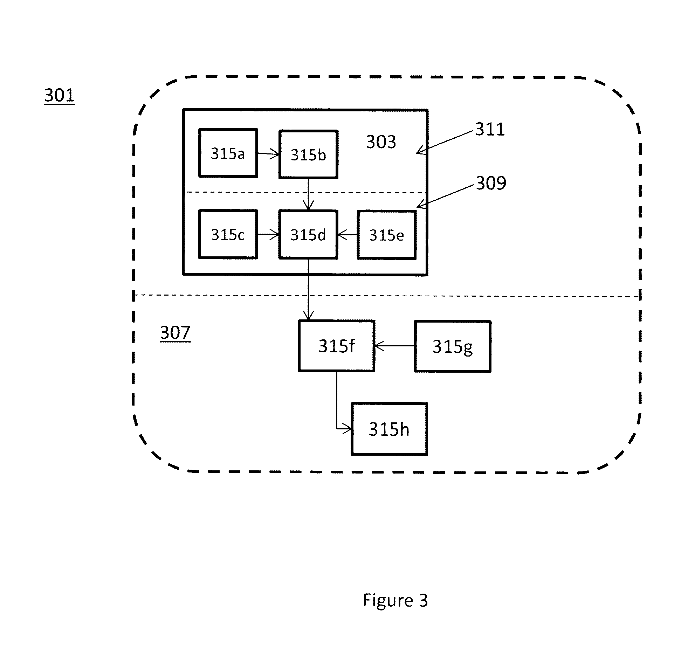

In this connection, figure 3 is a schematic block diagram of a framework according to an example, in which the framework spans between the various spaces associated with a virutalised environment 301 in which a VM 303 is instantiated and controlled by a VMM and the framework extends between the kernel space 307 of the VMM, the kernel space 309 of the VM 303, and the user space 311 of the 303. As an alternative, not depicted, it will be readily apparent that a framework could in fact extend between the kernel spaces 307, 309, or between space 307 and space 311. The framework itself is composed of multiple elements 315a-h that are arranged to perform a desired data processing operation for an event or events associated with the environment 301.

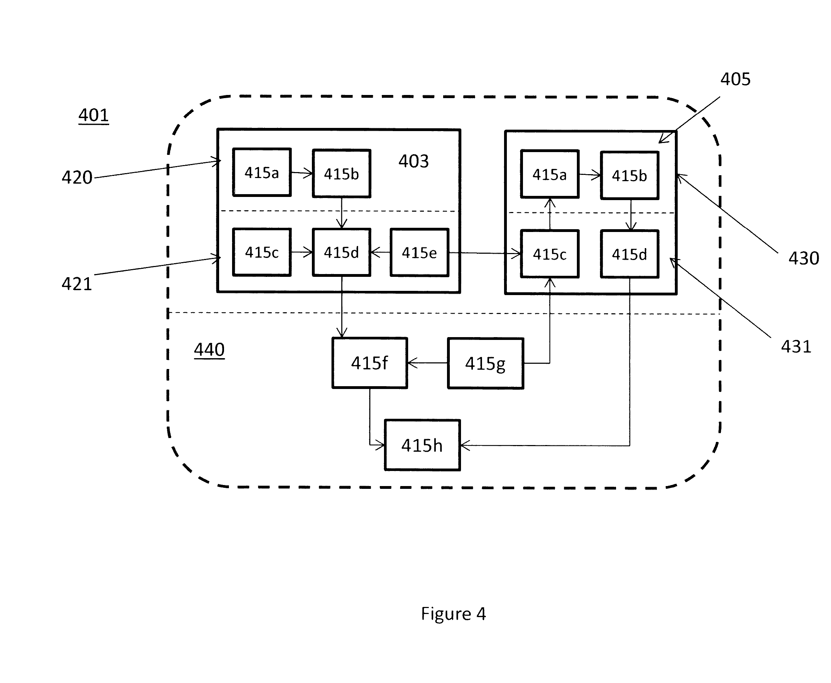

Figure 4 is a schematic block diagram of a framework according to an example, in which, similarly to figure 3 the framework spans between the various spaces associated with a virtualised environment 401 in which a VM 403 is instantiated and controlled by a VMM. In this case, a further VMM, 405, is provided. The framework extends across VMMs 403, 405, such that elements of the framework also extend between the kernel/user space boundaries associated with the VMs (420/421 and 430/431 for VMs 403 and 405) and the kernel space of the VMM (440). Variations will be apparent, similarly to those referenced above with respect to figure 3, but also including the extension to include the additional kernel and user spaces of the VM 405, and the permutations for the placement of elements that could imply.

In an example, an infrastructure provider may define its own private topology or framework, and/or may expose some parts of its monitoring framework to allow cloud applications to take advantage of gathered information. For example, adaptive applications needing to scale by replicating their functionality in additional VMs when response-times increase too much. Applications may use the same data analytic platform to define their own completely custom and private topologies, as well as to define publicly available and exposed topologies, and/or to connect their topology(ies) with the system-wide topology(ies) available within the system either from a cloud provider itself or from other applications/tenants.

According to an example, programming interfaces effect the definition of generic event processors, which can be compiled and loaded (dynamically or statically) within, for example, a cloud kernel. For example, instantiatable elements in an OS/kernel can be made available as statically linked kernel modules, as well as dynamically loadable kernel modules, such as for use with Linux for example. In the user-space, such elements may be compiled and dynamically loaded as dynamically loadable libraries (.so on Linux or .DLL on Windows systems), or statically compiled within specific applications making use of custom elements for their own analytics or processing purposes.

Elements do not need to be independent processes or threads. At the kernel or hypervisor level, they can be software or other such computational components that may be activated at various possible instants by the kernel itself, including during the processing of incoming interrupts by interrupt service routines, as part of system calls executions, bottom halves or other types of deferred work, such as in the Linux kernel for example, or as kernel-level threads.

At the user-space level, elements can be independently executing processes, threads within the same process, simple functions that are activated in a C program (or similar) when being notified of the receipt of an event through for example a POSIX signal delivery, or methods of a Java class that are called by means of asynchronous notification interfaces.

In an example, if elements are constrained not to have side effect and they communicate through the stream of events going through their input and output ports, and the responsibility for creating and destroying events of the streams is defined in a clear and unambiguous way, then elements can be deployed within various contexts without special problems, and they can be activated either sequentially or concurrently if possible/allowed, depending on the best conditions as judged by the events processing and routing engine.

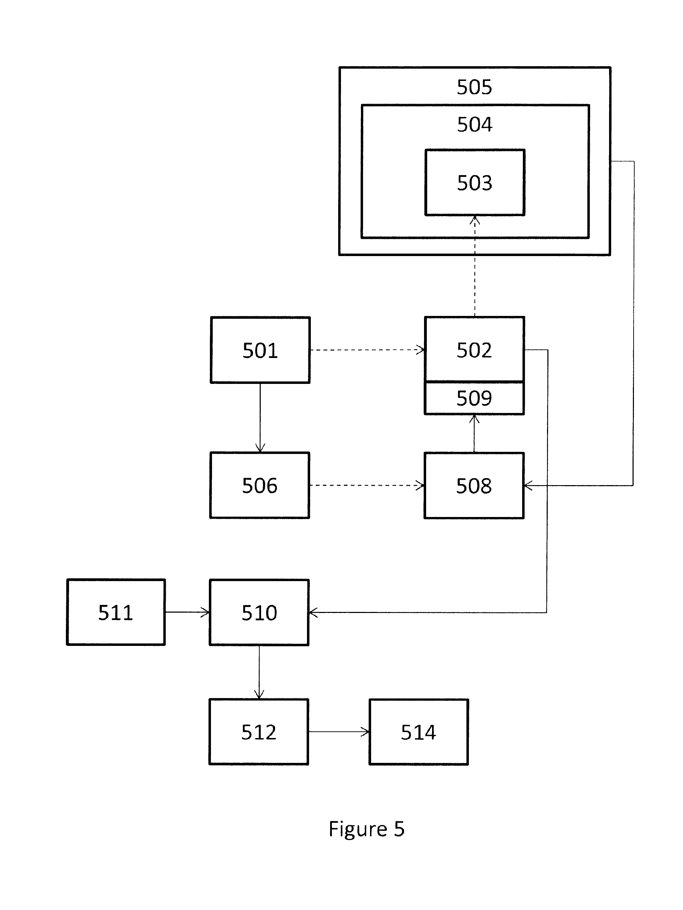

Figure 5 is a flowchart of a method for data processing according to an example. At block 501, at least one computational element 502 is provided to form an events processing framework 503 distributed across at least a user space and a kernel space of an operating system 504 in execution on a device 505. Device 505 can be a VM for example. The element 502 can be deployed for the operating system or otherwise loaded or statically or dynamically linked such as described above. At block 506 data 508 is received at an input 509 at the element 502, the data representing at least one event for the device 505. At block 510 the data is processed according to a predetermined rule 511 associated with the element to provide output data 512, and at block 514 the output data is output, such as to the input of another element for example.

Although methods and systems have been described herein predominantly with reference to virtualised environments in which one or more virtual machines operates, it will be appreciated, as mentioned above, that the methods and so on as described herein are equally applicable to more conventional cases not involving virtualised environments for example.

The present inventions may be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A computer-implemented method for data processing, comprising:
providing at least one computational element to form an events processing framework distributed across at least a user space and a kernel space of an operating system in execution on a device;
receiving data at the element representing at least one event for the device;
processing the data according to a predetermined rule associated with the element to provide output data; and outputting the output data.

2. A method as claimed in claim 1, wherein the events processing framework forms a directed graph of multiple computational elements for the environment.

3. A method as claimed in claim 1 or 2, further comprising:
receiving data at the element representing a sequence of multiple events in the form of an event stream with regular or irregular spacing between the multiple events of the stream.

4. A method as claimed in any preceding claim, wherein an event includes data representing the identity of the device or of a process causing the event.

5. A method as claimed in any preceding claim, wherein the or each element includes zero, one or more input event ports, and/or zero, one or more output event ports, through which the or each element, respectively, receives events and produces events.

6. A method as claimed in claim 5, wherein an event port for an element is associated with an event type representing a type of event that can transit through that port.

7. A method as claimed in any preceding claim, wherein the device is a virtual computing device operating through at least one physical computing device as part of a virtualised environment.

8. A method as claimed in claim 7, wherein the framework is distributed between a kernel space of a virtual machine monitor, a kernel space of the virtual computing device, and a user space of the virtual computing device.

9. A method as claimed in any preceding claim, wherein the events processing framework is dynamically scaled by instantiating multiple elements with the same characteristics to provide horizontal scaling capability for the framework.

10. A computer-implemented computational element to process data representing an event associated with a device, the element forming an events processing framework distributed between at least a user space and a kernel space of the device, and operable to receive data representing the event;
process the received data according to a predetermined rule associated with the element to generate output data; and forwarding the output data.

11. An element as claimed in claim 10, further comprising:
zero, one or more input event ports to receive data representing the event;
zero, one or more output event ports to provide the output data.

12. An element as claimed in claim 10, wherein an event port is associated with an event type used to determine the type of event that can transit through that port.

13. An element as claimed in any of claims 10 to 12, wherein the device is a virtual computing device, and in which the framework is distributed between a kernel space of a virtual machine monitor, a kernel space of the virtual computing device, and a user space of the virtual computing device.

14. A computer-implemented method for monitoring activity in a virtualised environment in which at least one virtual computing device operates through at least one physical computing device, said method comprising:
generating multiple computational elements to define a topology for processing data associated with one or more events of the device, wherein at least a proportion of the multiple elements are distributed between the kernel space and the user space of a virtual computing device or are distributed across a boundary of at least two of the multiple virtual computing devices.

15. A computer program product, comprising a computer usable medium having computer readable program code embodied therein, said computer readable program code adapted to be executed to implement a method for data processing as claimed in any of claims 1 to 9.
